# EUROPEAN PATENT APPLICATION

(11) **EP 4 721 600 A1**
(43) Date of publication of application: **08.04.2026**
(21) Application number: 24814233.3
(22) Date of filing: 20.05.2024
(51) Int. Cl.: A24F 40/46, A24F 40/48, A24F 40/10, C04B 38/08

(54) **ATOMIZATION CORE, ATOMIZER AND ELECTRONIC ATOMIZATION DEVICE**

(30) Priority: 01.06.2023 CN 202310644420
(71) Applicant: Smoore International Holdings Limited, Grand Cayman, KY1-1111 (KY)
(72) Inventor: WANG, Jianguo, Shenzhen, Guangdong 518102 (CN); NAN, Bo, Shenzhen, Guangdong 518102 (CN); XIAO, Lingrong, Shenzhen, Guangdong 518102 (CN); HE, Xueqin, Shenzhen, Guangdong 518102 (CN); CHEN, Chaopeng, Shenzhen, Guangdong 518102 (CN); XIE, Yi, Shenzhen, Guangdong 518102 (CN)
(74) Representative: Winter, Brandl - Partnerschaft mbB
(86) International application number: PCT/CN2024/094260
(87) International publication number: WO 2024/245034

(57) **Abstract**

This application relates to the field of electronic atomization technologies, and in particular, to an atomization core, an atomizer, and an electronic atomization device. This application provides an atomization core, including a porous substrate and a heating element. The porous substrate is a porous glass-ceramic substrate. A porosity of the porous glass-ceramic substrate is not less than 50%. A pore size distribution parameter (D90-D10)/D50 thereof is denoted as α, and (D50-D10)/D50 is denoted as β. The pore size distribution parameters of the porous glass-ceramic substrate satisfy α < 0.46 and β < 0.28. Uniformity of pores of the atomization core of this application can improve an atomization effect.

## Description

### CROSS-REFERENCE TO RELATED APPLICATIONS

This application claims priority to Chinese Patent Application No. 202310644420.2, filed with the China National Intellectual Property Administration on June 1, 2023 and entitled "ATOMIZATION CORE, ATOMIZER, AND ELECTRONIC ATOMIZATION DEVICE", which is incorporated herein by reference in its entirety.

### TECHNICAL FIELD

This application relates to the field of electronic atomization technologies, and in particular, to an atomization core, an atomizer, and an electronic atomization device.

### BACKGROUND

Currently, a main atomization manner of a commercially available e-cigarette is resistance heating atomization, and e-liquid is atomized through heating of an atomization core. Generally, the atomization core includes a porous substrate and a heating element. An existing porous substrate is usually made of a material with a porous structure, such as a cotton core and a porous ceramic, to achieve a function of guiding an atomization medium toward the heating element.

However, the ceramic material is usually manufactured by complex composition such as diatomite, and a porous substrate manufactured through the ceramic material has an uncontrollable pore, which is not beneficial to improving an atomization effect and has a low atomization amount.

### SUMMARY

An objective of this application is to provide an atomization core, an atomizer, and an electronic atomization device, so as to overcome a defect that a pore structure of an atomization core made of an existing porous ceramic material is uncontrollable, which is not beneficial to improving an atomization effect and has a relatively low atomization amount.

To achieve the foregoing objective, this application adopts the following technical solutions.

This application provides an atomization core. The atomization core includes a porous substrate and a heating element.

The porous substrate is a porous glass-ceramic substrate, a porosity of the porous glass-ceramic substrate is not less than 50%, a pore size distribution parameter (D90-D10)/D50 thereof is denoted as α, (D50-D10)/D50 is denoted as β, and the pore size distribution parameters of the porous glass-ceramic substrate satisfy α < 0.46 and β < 0.28.

Optionally, the porous glass-ceramic substrate includes a plurality of glass-ceramic bubbles.

Adjacent glass-ceramic bubbles are directly bonded to each other through sintering.

At least some of the glass-ceramic bubbles have openings.

Cavities in the glass-ceramic bubbles having the openings are in communication with each other through the openings to form pores, and the pores extend through the porous glass-ceramic substrate and reach a surface of the porous glass-ceramic substrate.

Optionally, a porosity of the porous glass-ceramic substrate ranges from 58% to 96%.

Optionally, a crystallinity of the porous glass-ceramic substrate is greater than 50%.

Optionally, the crystallinity of the porous glass-ceramic substrate ranges from 60% to 90%.

Optionally, a compressive strength of the porous glass-ceramic substrate is greater than 5 MPa.

Optionally, the compressive strength of the porous glass-ceramic substrate ranges from 5 MPa to 20 MPa.

Optionally, the porous glass-ceramic substrate further includes pores formed by a pore-forming agent.

Optionally, the heating element is at least one of a metal heating wire, a metal heating mesh, or a metal heating film.

The heating element is arranged on at least one surface of the porous glass-ceramic substrate.

Optionally, the metal heating film is selected from at least one of stainless steel or a nickel-containing alloy.

This application provides an atomizer. The atomizer includes the foregoing atomization core.

This application further provides an electronic atomization device. The electronic atomization device includes the foregoing atomizer, and further includes a battery assembly.

Beneficial effects of this application are as follows.

In the atomization core provided in this application, the atomization core includes a porous substrate and a heating element. The porous substrate is a porous glass-ceramic substrate. A porosity of the porous glass-ceramic substrate is not less than 50%. A pore size distribution parameter (D90-D10)/D50 thereof is denoted as α, and (D50-D10)/D50 is denoted as β. The pore size distribution parameters of the porous glass-ceramic substrate satisfy α < 0.46 and β < 0.28. In this application, the pore size distribution of the porous glass-ceramic substrate is controlled to achieve the uniformity of the pores, namely, a uniform narrow pore size distribution, which facilitates improvements of an atomization effect and an atomization amount, and enables a better mechanical property and a higher compressive strength in a case of a same porosity. The porous substrate as a whole has better pressure resistance consistency and has no weak area.

### BRIEF DESCRIPTION OF THE DRAWINGS

To describe technical solutions in specific implementations of this application or in the related art more clearly, the accompanying drawings required for describing the specific implementations or the related art are briefly described below. Apparently, the accompanying drawings in the following description show some implementations of this application, and a person of ordinary skill in the art may still derive other drawings from these accompanying drawings without creative efforts.
FIG. 1 is a schematic diagram of an atomizer according to this application.
FIG. 2 is a schematic diagram of an electronic atomization device according to this application.
FIG. 3 is a physical diagram of an atomization core and a heating element according to Embodiment 1 of this application.
FIG. 4 is a diagram of test results of atomization amounts and lifespan of dies of atomization cores according to Embodiment 1 to Embodiment 5 of this application.
FIG. 5 is a diagram of a test result of atomization amounts with a change of a quantity of inhalations when an atomization core is assembled into an atomizer strip according to Embodiment 1 to Embodiment 4 of this application.
FIG. 6 is a scanning electron micrography (SEM) diagram of a cross-section of a porous glass-ceramic substrate according to Embodiment 1 of this application.

Reference numerals: 1-Atomizer, 2-Battery assembly.

### DETAILED DESCRIPTION

The following embodiments are provided to better understand this application and are not intended limit an optimum implementation, and do not constitute a limitation to the content and the scope of protection of this application. Any product identical or similar to this application obtained by anyone under the inspiration of this application or by combining this application with the features of other prior art shall fall within the scope of protection of this application.

If no specific experimental steps or conditions are specified in the embodiments, the experiments can be carried out according to the conventional experimental steps or conditions described in the literature in the art. Reagents or instruments used without indicating the manufacturer are all conventional reagent products that can be purchased commercially.

An atomization manner of a commercially available e-cigarette is mainly resistance heating atomization, and e-liquid is atomized through heating of an atomization core. An existing atomization core usually includes a porous substrate and a heating element. The porous substrate is usually made of a material with a porous structure, such as a cotton core and a porous ceramic, to achieve a function of guiding an atomization medium toward the heating element.

However, the ceramic material is usually manufactured by complex composition such as diatomite, and a porous substrate manufactured through the ceramic material has an uncontrollable pore, which is not beneficial to improving an atomization effect and has a low atomization amount.

Therefore, this application provides an atomization core. The atomization core includes a porous substrate and a heating element. The porous substrate is a porous glass-ceramic substrate. A porosity of the porous glass-ceramic substrate is not less than 50%. A pore size distribution parameter (D90-D10)/D50 thereof is denoted as α, and (D50-D10)/D50 is denoted as β. The pore size distribution parameters of the porous glass-ceramic substrate satisfy α < 0.46 and β < 0.28.

A D50 particle size of glass-ceramic bubbles is a corresponding particle size when a cumulative particle size distribution percentage of the glass-ceramic bubbles reaches 50%. The particle size has a physical meaning that glass-ceramic bubbles having particle sizes greater than the particle size account for 50%, while glass-ceramic bubbles having particle sizes less than the particle size also account for 50%. D50 is also referred to as a median size or a median particle size. The D10 particle size of the glass-ceramic bubbles is a corresponding particle size when the accumulative particle size distribution percentage of the glass-ceramic bubbles reaches 10%. The D90 particle size of the glass-ceramic bubbles is a corresponding particle size when the accumulative particle size distribution percentage of the glass-ceramic bubbles reaches 90%. Similarly, a D50 pore size is a corresponding pore size when the accumulative pore size distribution percentage of a porous glass-ceramic substrate reaches 50%. The pore size has a physical meaning that pores having pore sizes greater than the pore size accounts for 50%, while pores having pore sizes less than the pore size also account for 50%. A D10 pore size is a corresponding pore size when the accumulative pore size distribution percentage of the porous glass-ceramic substrate reaches 10%. A D90 pore size is a corresponding pore size when the accumulative pore size distribution percentage of the porous glass-ceramic substrate reaches 90%. Therefore, the ratio of (D90-D10)/D50 and the ratio of (D50-D10)/D50 provide an understanding about the pore sizes.

A test for a pore size is performed through a mercury porosimeter to obtain detailed parameters about the D1 pore size, the D50 pore size, and the D90 pore size.

The inventor finds that more uniform pores, namely, a narrow pore size distribution, help improve an atomization amount and enable a better mechanical property, namely, a higher compressive strength or a higher shearing strength in a case of a same porosity. In this application, the pore size distribution of the porous glass-ceramic substrate is controlled to achieve the uniformity of pores, namely, a uniform narrow pore size distribution. A better atomization effect and a higher compressive strength are enabled in a case of the same porosity. A porous substrate as a whole has better pressure resistance consistency and has no weak area. Soot generated in a substrate is reduced, a taste is not affected, a service life is improved, and an e-liquid guiding effect is improved.

The reason of the improvement of the mechanical performance in this application is as follows. In one aspect, magnitudes of pore sizes are more uniform, so that the overall consistency of the porous substrate is better, the consistency of the mechanical performance of respective areas is better and has no weak area, so that the overall mechanical performance is better. In another aspect, the strength of the porous glass-ceramic substrate using glass phase composition is superior to that of an existing porous ceramics system. In a third aspect, the formation of the pore structure of the porous glass-ceramic substrate is a result of opening of the glass-ceramic bubbles. Therefore, the framework structure that bears the mechanics has better mechanical stability.

In addition, during the atomization, an atomization core with a small pore size is prone to being blocked, so that e-liquid guiding is poor, thereby generating soot. However, an atomization core with a large pore size is prone to excessive e-liquid supply and e-liquid overflow. The two situations affect the atomization amount. The uniform pore structure in this application can resolve the foregoing problems in a targeted manner. In other words, the ratios of large pores and small pores are reduced, so that the pores are more uniform. Therefore, the e-liquid can be more uniformly and smoothly guided, thereby improving the atomization amount, reducing the soot, prolonging the service life, and maintaining consistency of the taste.

In some optional implementations, the porous glass-ceramic substrate includes a plurality of glass-ceramic bubbles. Adjacent glass-ceramic bubbles are directly bonded to each other through sintering. At least some of the glass-ceramic bubbles have openings. Cavities in the glass-ceramic bubbles having the openings are in communication with each other through the openings to form pores, and the pores extend through the porous glass-ceramic substrate and reach a surface of the porous glass-ceramic substrate.

A raw material used in this application includes glass bubbles having a cavity structure, also referred to as a hollow glass "microsphere", which may be obtained commercially. In a manufacturing process of this application, the glass bubbles of the raw material are sintered to form glass-ceramic bubbles with an opening of a certain degree of crystallinity. Optionally, the glass bubbles of the raw material may also have a certain degree of crystallinity. In other words, the glass bubbles of the raw material may be glass or a glass-ceramic. In some optional implementations, the crystallinity of the porous glass-ceramic substrate is greater than 50%. Further, the crystallinity of the porous glass-ceramic substrate ranges from 60% to 90%. For example, optionally, the crystallinity of the glass-ceramic bubbles is 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, or 90%.

In some optional implementations, the porosity of the porous glass-ceramic substrate ranges from 58% to 96%. For example, optionally, the porosity of the porous glass-ceramic substrate is 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, or 96%. In some optional implementations, the pores of the porous glass-ceramic substrate include pores formed by openings of glass-ceramic bubbles. In some other optional implementations, the pores of the porous glass-ceramic substrate include pores formed by openings of glass-ceramic bubbles, and further include pores formed by a pore-forming agent. It should be noted that, on one hand, a magnitude of the porosity of the porous glass-ceramic substrate may be controlled and adjusted by selecting the glass bubbles of the raw material; on the other hand, the size of the porosity of the porous glass-ceramic substrate may also be adjusted in a manner of properly adding a specific proportion of the pore-forming agent in the preparation process. It may be understood that for a single glass bubble, a volume of an internal cavity thereof to an overall volume of the single glass bubble determines a density thereof. Therefore, a glass bubble monomer of a specific density can be screened out (floated) through liquid having a suitable density. The glass bubbles having the specific density can correspondingly manufacture a porous glass-ceramic substrate having a corresponding porosity. It may be understood that the density of the single glass bubble is excessively small. In other words, a smaller wall thickness thereof leads to a reduced strength of the single glass bubble. Therefore, in a case that a strength requirement thereof is ensured, the porosity cannot be increased by simply increasing a proportion of a cavity thereof. Therefore, the inventor further improves the porosity thereof by adding the pore-forming agent in a case that the overall strength of the glass bubbles and the porous glass-ceramic substrate after molding are ensured. In addition, glass bubbles of the raw material having a required particle size may be obtained through suitable screening, and a pore size of a cavity of required glass bubbles of the raw material can be obtained. Through the suitable glass bubbles of the raw material and the manufacturing process, the pore structure of the porous glass-ceramic substrate can be controlled.

In some optional implementations, a compressive strength of the porous glass-ceramic substrate is greater than 5 MPa. Optionally, the compressive strength of the porous glass-ceramic substrate ranges from 5 MPa to 20 MPa. In this application, by controlling an α value and a β value of an indicated pore size distribution range, the compressive strength of the porous glass-ceramic substrate greater than 5 MPa may be achieved.

A material and a shape of a heating element are not specifically limited in this application. In some optional implementations, the heating element is at least one of a metal heating wire, a metal heating mesh, or a metal heating film. The heating element is arranged on at least one surface of the porous glass-ceramic substrate. Optionally, the metal heating film is selected from at least one of stainless steel or a nickel-containing alloy.

In some optional implementations, a manufacturing method of the heating element arranged on at least one surface of the porous glass-ceramic substrate includes at least one of printing, welding, evaporation, or deposition. For example, optionally, a heating element paste is printed on a substrate, and is formed through sintering at a preset temperature. Optionally, the heating element or a heating mesh is soldered to the substrate. Optionally, the heating element is evaporated/deposited on the substrate through physical vapor deposition (PVD) or chemical vapor deposition (CVD).

In some optional implementations, the manufacturing method of the atomization core includes the following steps.
1) Mix the glass bubbles of the raw material with a binder, a slipping agent, and water, and perform pressing and forming to obtain a green body.
2) Perform a first sintering, a second sintering, and a third sintering on the green body in step 1), to obtain the porous glass-ceramic substrate.
3) Print a heating element paste on the porous glass-ceramic substrate in step 2) and form through sintering.

In some optional implementations, in step (1), the binder may be an organic binder. Specifically, the binder is selected from at least one of methylcellulose, hydroxyethyl cellulose, or hydroxypropyl methylcellulose. The slipping agent may be a slipping agent of an aliphatic hydrocarbon, for example, a paraffin, or a metal stearate. Specifically, the slipping agent is sodium stearate.

In some optional implementations, a pressure for pressing and forming in step 1) ranges from 1 bar to 30 bar. Most of the glass bubbles do not fragment during the pressing and forming process, and a complete spherical shape of the single glass bubble is maintained. Therefore, the pressure for pressing and forming may be properly adjusted based on a compressive strength of the selected glass bubbles.

In some optional implementations, in step 2), a first temperature of the first sintering is at least 200°C, for example, 300°C to 400°C, and/or a first residence time is at least 1 minute, for example, 1 hour to 10 hours. During the sintering process at the temperature, a substance such as a solvent and a binder is removed from the green body.

In some optional implementations, a second temperature of the second sintering is greater than 400°C and less than a softening point of glass of the glass bubbles. for example, 500°C, 600°C, or 700°C, and a second residence time thereof is at least 1 minute, for example, 1 hour to 10 hours. The purpose of the second temperature is greater than 400°C and less than the softening point of the glass of the glass bubbles is to keep an original form of the green body unchanged. In addition, because the temperature has already exceeded 400°C, glass composition in the glass bubbles start to change. A disordered glass phase partially crystallizes to a crystal phase within the temperature range, and the glass bubbles convert into the glass-ceramic bubbles or a proportion of the crystal phase in the glass bubbles starts to increase. In addition, due to the conversion, some of the glass bubbles begin to crack and have at least one opening. Therefore, the sintering time within the temperature range may be properly adjusted to regulate the crystallinity of the porous glass-ceramic. It may be understood that the glass bubbles of the raw material may also include a certain proportion of the crystal phase, which may shorten the sintering time in this process.

In some optional implementations, a third temperature of the third sintering is greater than the softening point of the glass. Specifically, a temperature of the softening point of the glass is less than 900°C. A third residence time may be at least 1 minute, for example, 1 hour to 10 hours. At this temperature, the glass composition has flowability. Therefore, adjacent glass-ceramic bubbles are directly adhered to each other, and the glass-ceramic bubbles are adhered to form a porous glass-ceramic substrate of an integral structure. In addition, because the glass-ceramic bubbles still have crystal phase composition, the crystal phase composition, as a framework, causes the form of the glass-ceramic bubbles to not collapse, and still maintains a basic complete form. In addition, the glass-ceramic bubbles are further cracked to form a large quantity of openings. The openings are in communication with each other to form pores. The pores extend through the porous glass-ceramic substrate and reach a surface of the porous glass-ceramic substrate.

The third temperature is greater than the softening point of the glass of the glass bubble. The glass-ceramic bubbles are heated at least to a softening temperature of an amorphous glass, so that most of the glass-ceramic bubbles open due to expansion of air in the bubbles. In addition, the heating causes the adjacent glass-ceramic bubbles to sinter together and form a bond. Overall, the bonded open glass-ceramic bubbles form the pores of the porous glass-ceramic substrate. The glass-ceramic bubbles are applied to an atomizer and an electronic atomization device, so as to effectively improve atomization efficiency and a liquid-guiding effect.

In some optional implementations, a mass ratio of the glass bubbles to the binder, the slipping agent, and the water is (100-120) : (25-29) : (2-3) : (57-90).

In some optional implementations, in step 3), the raw material of the heating element may be at least one of the electronic paste (metal paste), the heating wire, or the heating mesh. The electronic paste may be directly applied to the surface of the porous glass-ceramic substrate through screen printing based on a preset contour, and then is formed through sintering at the preset temperature. The sintering temperature may be adaptively adjusted based on types of a bonding phase and metal composition in the electronic paste. Generally, the sintering temperature ranges from 400°C to 800°C.

In some optional implementations, the glass composition of the glass bubbles may be soda-lime silicate glass, borosilicate glass, or another glass. Specifically, the glass composition may include: 74-85% of SiO₂, 6.5-10% of CaO, 5-9% of B₂O₃, 0.4-2% of Al₂O₃, 0.01-1% of Si₂O₃, 1-3% of Na₂O, and 0.1-0.5% of K₂O.

In some optional embodiments, in step 1), the pore-forming agent is further added. Optionally, the pore-forming agent is selected from at least one of starch, polymethyl methacrylate (PMMA), polystyrene (PS), or graphite. Optionally, a particle size of the pore-forming agent may range from 1um to 150 um. It may be understood that the addition of the pore-forming agent may further increase the porosity of the porous glass-ceramic substrate in a case that the strength of the glass bubbles of the raw material is ensured.

In some optional implementations, in step 1), a second inorganic material is further included. The second inorganic material may be at least one of clay, talc, silica, or alumina. Melting points or softening points of the foregoing materials are greater than the softening point of the glass in the glass bubbles.

In some optional implementations, a mass ratio of the glass bubbles to the binder, the slipping agent, the water, the pore-forming agent, and the second inorganic material is (100-120) : (25-29) : (2-3) : (57-90): (0-55) : (0-7.5).

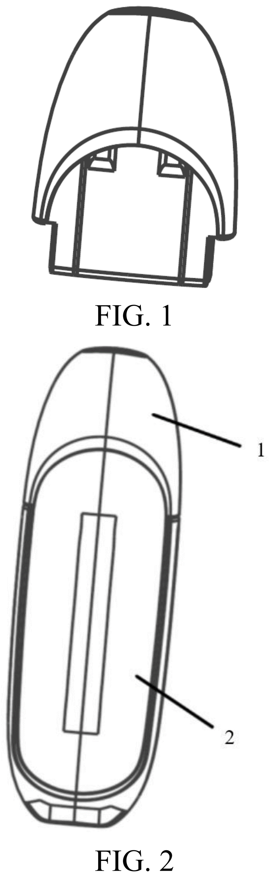

As shown in FIG. 1, this application further provides an atomizer. The atomizer includes the foregoing atomization core. The atomizer includes a shell. A liquid storage tank and an atomization cavity are formed in the shell. The liquid storage tank is configured to store a liquid atomization medium, and the atomization cavity is configured to accommodate the foregoing atomization core. The atomization core may atomize the liquid atomization medium.

As shown in FIG. 2, this application further provides an electronic atomization device. The electronic atomization device includes the foregoing atomizer 1, and further includes a battery assembly 2. The battery assembly and the atomizer may be of an integrated structure or a detachable structure. The battery assembly is configured to supply power to the atomizer based on a preset mode, so that the atomizer atomizes the liquid atomization medium based on the preset mode.

This application is further described in detail below with reference to specific embodiments. These embodiments cannot be understood as limiting the protection scope of this application.

In this application, the composition of the glass bubbles is soda-lime silicate glass. The glass bubbles of the raw material with same composition are used in the following embodiments. Main composition of the glass bubbles of the raw material is: Si: 41.647 wt%, O: 49.375 wt%, Na: 3.778 wt%, Pa: 4.619 wt%, Mw: 0.201 wt%, and Al: 0.379 wt%. For other parameters, reference is made to Table 1. The particle size of the raw material is represented through a particle size analyzer.

### Embodiment 1

This embodiment provides an atomization core. A manufacturing method thereof includes the following steps.
1) Mix 100g of a glass bubbles (the parameters of the glass bubbles are as shown in Table 1), 25 g of hydroxyethyl cellulose, 2.5 g of sodium stearate, 4 g of aluminium oxide, and 57 g of water, and perform pressing and forming to obtain a green body, where a forming pressure is 14 bar.
2) Perform a first sintering, a second sintering, and a third sintering on the green body in step 1), to obtain a porous glass-ceramic substrate, where a first sintering temperature is 220°C, a first sintering time is 2h, a second sintering temperature is 410°C, a second sintering time is 3h, a third sintering temperature is 950°C, and a third sintering time is 2.5h.
3) Print 310 stainless steel paste on the porous glass-ceramic substrate in step 2) and form through sintering, a sintering temperature being 780°C and a sintering time being 1h, to obtain the atomization core.

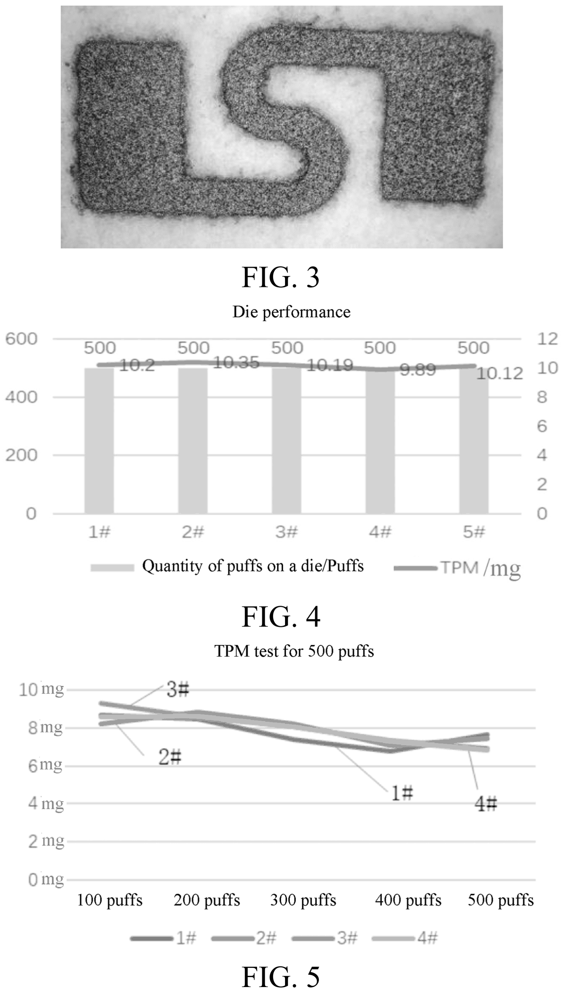

The atomization core manufactured in this embodiment includes a porous glass-ceramic substrate and a 310 stainless steel heating element (the form of the heating element is shown in FIG. 3). The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form pores, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. Obtained α values and β values are specifically shown in Table 1. D90, D10, and D50 are tested through a mercury intrusion method, and the test device is a mercury porosimeter.

### Embodiment 2

This embodiment provides an atomization core. A manufacturing method thereof includes the following steps.
1) Mix 100g of glass bubbles (the parameters of the glass bubbles are as shown in Table 1), 25g of hydroxyethyl cellulose, 2.5g of sodium stearate, 4g of clay, 7g of polystyrene (PS), and 67 g of water, and perform pressing and forming to obtain a green body, where a forming pressure is 20 bar.
2) Perform a first sintering, a second sintering, and a third sintering on the green body in step 1), to obtain a porous glass-ceramic substrate, where a first sintering temperature is 350°C, a first sintering time is 1.5h, a second sintering temperature is 550°C, a second sintering time is 1.5h, a third sintering temperature is 950°C, and a third sintering time is 1.5h.
3) Print 310 stainless steel paste on the porous glass-ceramic substrate in step 2) and form through sintering, a sintering temperature being 780°C and a sintering time being 1.5h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form pores, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

### Embodiment 3

This embodiment provides an atomization core. A manufacturing method thereof includes the following steps.
1) Mix 115g of glass bubbles (the parameters of the glass bubbles are as shown in Table 1), 26g of hydroxyethyl cellulose, 2.2g of sodium stearate, 7g of clay, 20g of starch, and 90g of water, and perform pressing and forming to obtain a green body, where a forming pressure is 30 bar.
2) Perform a first sintering, a second sintering, and a third sintering on the green body in step 1), to obtain a porous glass-ceramic substrate, where a first sintering temperature is 340°C, a first sintering time is 2.5h, a second sintering temperature is 540°C, a second sintering time is 1h, a third sintering temperature is 970°C, and a third sintering time is 2h.
3) Print 310 stainless steel paste on the porous glass-ceramic substrate in step 2) and form through sintering, a sintering temperature being 770°C and a sintering time being 2h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form pores, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

### Embodiment 4

This embodiment provides an atomization core. A manufacturing method thereof includes the following steps.
1) Mix 117g of glass bubbles (the parameters of the glass bubbles are as shown in Table 1), 28 g of hydroxyethyl cellulose, 2.1g of sodium stearate, and 60g of water, and perform pressing and forming to obtain a green body, where a forming pressure is 17 bar.
2) Perform a first sintering, a second sintering, and a third sintering on the green body in step 1), to obtain a porous glass-ceramic substrate, where a first sintering temperature is 370°C, a first sintering time is 4h, a second sintering temperature is 600°C, a second sintering time is 2.5h, a third sintering temperature is 1000°C, and a third sintering time is 1.5h.
3) Print 310 stainless steel paste on the porous glass-ceramic substrate in step 2) and form through sintering, a sintering temperature being 800°C and a sintering time being 2h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form pores, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

### Embodiment 5

This embodiment provides an atomization core. A manufacturing method thereof includes the following steps.
1) Mix 102g of glass bubbles (the parameters of the glass bubbles are as shown in Table 1), 26g of hydroxyethyl cellulose, 2.6g of sodium stearate, 3.5g of talc, 10g of graphite, and 77 g of water, and perform pressing and forming to obtain a green body, where a forming pressure is 26 bar.
2) Perform a first sintering, a second sintering, and a third sintering on the green body in step 1), to obtain a porous glass-ceramic substrate, where a first sintering temperature is 400°C, a first sintering time is 3.5h, a second sintering temperature is 500°C, a second sintering time is 1.5h, a third sintering temperature is 1100°C, and a third sintering time is 3.5h.
3) Print 310 stainless steel paste on the porous glass-ceramic substrate in step 2) and form through sintering, a sintering temperature being 550°C and a sintering time being 5h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form pores, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

### Embodiment 6

This embodiment provides an atomization core. A manufacturing method thereof includes the following steps.
1) Mix 107g of glass bubbles (the parameters of the glass bubbles are as shown in Table 1), 29g of hydroxyethyl cellulose, 3g of sodium stearate, 7.5g of clay, 40g of polymethyl methacrylate (PMMA), and 90 g of water, and perform pressing and forming to obtain a green body, where a forming pressure is 30 bar.
2) Perform a first sintering, a second sintering, and a third sintering on the green body in step 1), to obtain a porous glass-ceramic substrate, where a first sintering temperature is 300°C, a first sintering time is 4.5h, a second sintering temperature is 600°C, a second sintering time is 2h, a third sintering temperature is 1120°C, and a third sintering time is 2.5h.
3) Print 310 stainless steel paste on the porous glass-ceramic substrate in step 2) and form through sintering, a sintering temperature being 800°C and a sintering time being 2h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form a pore, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

### Embodiment 7

This embodiment provides an atomization core. A manufacturing method thereof includes the following steps.
1) Mix 101g of glass bubbles (the parameters of the glass bubbles are as shown in Table 1), 26g of hydroxyethyl cellulose, 2g of sodium stearate, 3.2g of clay, and 70g of water, and perform pressing and forming to obtain a green body, where a forming pressure is 14 bar.
2) Perform a first sintering, a second sintering, and a third sintering on the green body in step 1), to obtain a porous glass-ceramic substrate, where a first sintering temperature is 360°C, a first sintering time is 5h, a second sintering temperature is 580°C, a second sintering time is 2h, a third sintering temperature is 960°C, and a third sintering time is 5h.
3) Print 310 stainless steel paste on the porous glass-ceramic substrate in step 2) and form through sintering, a sintering temperature being 750°C and a sintering time being 2h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form pores, and the pores extends through the porous glass-ceramic substrate and reaches a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

### Embodiment 8

This embodiment provides an atomization core. A manufacturing method thereof includes the following steps.
1) Mix 109g of glass bubbles (the parameters of the glass bubbles are as shown in Table 1), 25.5g of hydroxyethyl cellulose, 2g of sodium stearate, 7g of clay, and 88g of water, and perform pressing and forming to obtain a green body, where a forming pressure is 7 bar.
2) Perform a first sintering, a second sintering, and a third sintering on the green body in step 1), to obtain a porous glass-ceramic substrate, where a first sintering temperature is 360°C, a first sintering time is 5h, a second sintering temperature is 580°C, a second sintering time is 2h, a third sintering temperature is 960°C, and a third sintering time is 5h.
3) Print 310 stainless steel paste on the porous glass-ceramic substrate in step 2) and form through sintering, a sintering temperature being 500°C and a sintering time being 3h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through
sintering. At least some of the glass-ceramic bubbles has openings. Cavities in the glass-ceramic bubbles having the openings are in communication with each other through the openings to form pores, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

### Embodiment 9

This embodiment provides an atomization core. A manufacturing method thereof includes the following steps.
1) Mix 118g of glass bubbles (the parameters of the glass bubbles are as shown in Table 1), 27.9g of hydroxyethyl cellulose, 2.8g of sodium stearate, 50g of starch, and 60g of water, and perform pressing and forming to obtain a green body, where a forming pressure is 16 bar.
2) Perform a first sintering, a second sintering, and a third sintering on the green body in step 1), to obtain a porous glass-ceramic substrate, where a first sintering temperature is 360°C, a first sintering time is 4h, a second sintering temperature is 500°C, a second sintering time is 1.5h, a third sintering temperature is 1100°C, and a third sintering time is 3.5h.
3) Print 310 stainless steel paste on the porous glass-ceramic substrate in step 2) and form through sintering, a sintering temperature being 500°C and a sintering time being 1h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form pores, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

### Embodiment 10

This embodiment provides an atomization core. A manufacturing method thereof includes the following steps.
1) Mix 120g of glass bubbles (the parameters of the glass bubbles are as shown in Table 1), 26g of hydroxyethyl cellulose, 2.8g of sodium stearate, 1g of clay, 11g of polystyrene, and 90 g of water, and perform pressing and forming to obtain a green body, where a forming pressure is 28 bar.
2) Perform a first sintering, a second sintering, and a third sintering on the green body in step 1), to obtain a porous glass-ceramic substrate, where a first sintering temperature is 380°C, a first sintering time is 10h, a second sintering temperature is 690°C, a second sintering time is 7h, a third sintering temperature is 1400°C, and a third sintering time is 5h.
3) Print 310 stainless steel paste on the porous glass-ceramic substrate in step 2) and form through sintering, a sintering temperature being 400°C and a sintering time being 5h, to obtain the atomization core.

The atomization core manufactured in this embodiment includes a porous glass-ceramic substrate and a 310 stainless steel heating element. The porous glass-ceramic substrate includes a plurality of glass-ceramic bubbles. Adjacent glass-ceramic bubbles are directly bonded to each other through sintering. At least some of the glass-ceramic bubbles has openings. Cavities in the glass-ceramic bubbles having the openings are in communication with each other through the openings to form pores, and the pores extend through the porous glass-ceramic substrate and reach a surface of the porous glass-ceramic substrate. The pore size distribution parameters (D90-D10)/D50 and (D50-D10)/D50 of the porous glass-ceramic substrate are designated as α and β. The measuring method for D90, D10, and D50 is the same as that in Embodiment 1. Obtained α values and β values are specifically shown in Table 1.

**Table 1**

| | Glass bubble parameter | | | | Porous glass-ceramic substrate parameter | | | | |
|---|---|---|---|---|---|---|---|---|---|
| | D10 | D50 | D90 | Intraparticle porosity (%) | D50 | D10 | D90 | β=(D50-D10)/D50 | α=(D90-D10)/D50 |
| Embodiment 1 | 18.61 | 39.38 | 69.47 | 84.8 | 20.76 | 17.97 | 23.14 | 0.13 | 0.25 |
| Embodiment 2 | 18.61 | 39.38 | 69.47 | 84.8 | 20.54 | 16.89 | 23.52 | 0.18 | 0.32 |
| Embodiment 3 | 17.16 | 37.74 | 74.35 | 81.6 | 15.62 | 13.67 | 17.41 | 0.13 | 0.24 |
| Embodiment 4 | 10.61 | 29.6 | 67.53 | 76 | 16.73 | 14.97 | 19.1 | 0.11 | 0.25 |
| Embodiment 5 | 10.61 | 29.6 | 67.53 | 76 | 22.09 | 19.24 | 25.63 | 0.13 | 0.29 |
| Embodiment 6 | 18.61 | 39.38 | 69.47 | 84.8 | 18.97 | 17.19 | 21.3 | 0.09 | 0.22 |
| Embodiment 7 | 17.16 | 37.74 | 74.35 | 81.6 | 22.35 | 19.04 | 26.47 | 0.15 | 0.33 |
| Embodiment 8 | 17.16 | 37.74 | 74.35 | 81.6 | 26.38 | 22.04 | 30.32 | 0.16 | 0.31 |
| Embodiment 9 | 10.61 | 29.6 | 67.53 | 76 | 23.53 | 19.8 | 27.02 | 0.16 | 0.31 |
| Embodiment 10 | 16.99 | 40.63 | 75.97 | 84.8 | 25.56 | 21.72 | 29.37 | 0.15 | 0.30 |

### Test example 1

Testing for a porosity, a compressive strength, and a pore size is performed on the porous glass-ceramic substrate of an atomization core according to this embodiment of this application.

A test method for the porosity and the pore size is a mercury intrusion method (a test device is a mercury porosimeter).

A test method for the compressive strength relates to 5 parallel samples that are taken for the same embodiment and separately tested. For a test method, reference is made to GB/T4740-1999 "Test Method for Compressive Strength of Ceramic Material".

The atomization core in this embodiment is used to respectively test for a smoke amount, soot, a lifespan, and a temperature field of the atomization core. In addition, an inhalation experiment is performed through the atomization core in this embodiment, to test an inhalation taste. A method for testing the smoke amount involves each inhalation process (that is, each puff) includes: inhaling for 3S and then pausing for 8S, testing the smoke amount in each inhalation process, and performing statistics collection to obtain an average value. After inhaling the preset 500 puffs, the soot on the surface of the atomization core is observed, to determine a deposit condition of the soot. During a process of inhaling the preset 500 puffs, whether a failure situation exists is tested, and statistics collection is performed to record a lifespan situation thereof. The failure situation mainly includes: 1. A significant abnormal change of a resistance of the atomization core (for example, a significant increase in the resistance caused by splitting or shedding of the heating element). 2. A fog output volume is less than half of an initial atomization amount. The foregoing test condition are 6.5W power and a die (not assembled as an atomizer). In the taste test, an atomization core is assembled into an atomizer. An atomization substrate used for the test is a fruit (watermelon) flavored e-liquid (e-liquid a).

The inhalation taste is determining, by a tester, whether any abnormal taste such as a burnt flavor exists during a preset process of inhaling 500 puffs.

**Table 1**

| | Average pore size/µm | Porosity % | Compressive strength/MPa | Smoke amount TPM (mg) (6.5W and a die) | Soot | Taste | Lifespan (preset 500 puffs) |
|---|---|---|---|---|---|---|---|
| | | | | E-liquid a | | | |
| Embodiment 1 | 20.25 | 70.96 | 7.6 | 12.45 | Less soot | No burnt flavor | No failure |
| Embodiment 2 | 20.25 | 70.12 | 7.9 | 12.50 | Less soot | No burnt flavor | No failure |
| Embodiment 3 | 15.37 | 58.11 | 16.3 | 12.11 | Less soot | No burnt flavor | No failure |
| Embodiment 4 | 16.7 | 59.54 | 15.9 | 12.01 | Less soot | No burnt flavor | No failure |
| Embodiment 5 | 22.15 | 66.04 | 13.6 | 12.36 | Less soot | No burnt flavor | No failure |
| Embodiment 6 | 19.07 | 66.14 | 6.5 | 12.34 | Less soot | No burnt flavor | No failure |
| Embodiment 7 | 22.28 | 69.18 | 6.9 | 12.38 | Less soot | No burnt flavor | No failure |
| Embodiment 8 | 25.88 | 70.97 | 6.5 | 11.77 | Less soot | No burnt flavor | No failure |
| Embodiment 9 | 23.16 | 72.77 | 5.4 | 11.44 | Less soot | No burnt flavor | No failure |
| Embodiment 10 | 25.35 | 75.73 | 1.6 | 11.79 | Less soot | No burnt flavor | No failure |

### Test example 2

A used atomization substrate is a tobacco flavored e-liquid (e-liquid b). Atomization amount and lifespan parameters are tested for the atomization cores of Embodiment 1-Embodiment 5 when the atomization cores are dies of atomization cores and are assembled into atomizers. Other conditions are the same as those in the test example 1.

FIG. 4 is a diagram of test results of an atomization amount and a lifespan for the atomization cores in a die condition according to Embodiment 1 to Embodiment 5. As shown in FIG. 4, Embodiment 1-Embodiment 5 are respectively denoted as 1#-5#. It can be seen that the service life of Embodiment 1-Embodiment 5 is more than 500 puffs, and the average atomization volume (TPM) is greater than 10 mg. It can be seen that the atomization core manufactured in the embodiments of this application enables more uniform and smooth liquid guide, and a large and uniform atomization amount.

FIG. 5 is a diagram of test results of an atomization amount with a quantity of inhalations under a condition of being assembled as an atomizer according to Embodiment 1 to Embodiment 4. As shown in FIG. 5, Embodiment 1-Embodiment 4 are respectively denoted as 1 # to 4 #. It can be seen that the atomization amount (TPM) for Embodiment 1 to Embodiment 4 is slowly decreased as a quantity of puffs increases, but the decreasing trend is slow during a life cycle of 500 puffs. An initial atomization amount is about 8.6 mg, and a final atomization amount is about 7.8 mg, enabling a small attenuation amplitude. Generally, a person skilled in the art considers that a tobacco flavored atomization substrate enables a lower service life than a fruit flavored atomization substrate, and a worse scaling phenomenon than the fruit flavored atomization substrate. However, the atomization core manufactured in embodiments of this application has a desirable atomization effect and a good service life for the two substrates. The inventor considers through analysis that soot is caused mainly by the following reason. In an atomization process, an atomization core with a small pore size is prone to being blocked, so that e-liquid guiding is poor, thereby generating soot. However, an atomization core with a large pore size is prone to excessive e-liquid supply and e-liquid overflow. The two situations affect the atomization amount. The atomization core in this application has a uniform pore structure. The features can resolve the foregoing problems in a targeted manner. In other words, the ratios of large pores and small pores are reduced, so that the pores are more uniform. Therefore, the e-liquid can be more uniformly and smoothly guided, thereby improving the atomization amount, reducing the soot, prolonging the service life, and maintaining consistency of the taste.

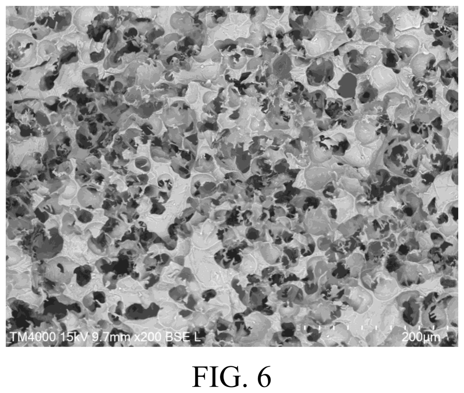

FIG. 6 is a cross-sectional SEM (scanning electron microscope) diagram of a porous glass-ceramic substrate of an atomization core according to Embodiment 1 of this application. As shown in the figure, an internal pore structure of the porous substrate is uniform and has a certain sphericity. The foregoing features are the main factors that causes the porous glass-ceramic substrate to have a more uniform pore size distribution.

Obviously, the above embodiments are merely examples for clear description and not limitations on the implementations. For a person of ordinary skill in the art, other changes or alterations in different forms may also be made based on the foregoing description. All implementations are not required and cannot be exhaustive herein. The obvious changes or modifications derived therefrom are still within the protection scope of this application.

## Claims

1. An atomization core, comprising a porous substrate and a heating element, wherein
the porous substrate is a porous glass-ceramic substrate, a porosity of the porous glass-ceramic substrate is not less than 50%, a pore size distribution parameter (D90-D10)/D50 thereof is denoted as α, (D50-D10)/D50 is denoted as β, and the pore size distribution parameters of the porous glass-ceramic substrate satisfy α < 0.46 and β < 0.28.

2. The atomization core of claim 1, wherein
the pore size distribution parameter of the porous glass-ceramic substrate satisfies β ≤ 0.18, and/or the pore size distribution parameter of the porous glass-ceramic substrate satisfies α ≤ 0.33; and
optionally, the pore size distribution parameter of the porous glass-ceramic substrate satisfies 0.09 ≤ β ≤ 0.18, and/or the pore size distribution parameter of porous glass-ceramic substrate satisfies 0.22 ≤ α ≤ 0.33.

3. The atomization core of claim 1, wherein the porous glass-ceramic substrate comprises a plurality of glass-ceramic bubbles;
adjacent glass-ceramic bubbles are directly bonded to each other through sintering;
at least some of the glass-ceramic bubbles have openings; and
cavities in the glass-ceramic bubbles having the openings are in communication with each other through the openings to form pores, and the pores extend through the porous glass-ceramic substrate and reach a surface of the porous glass-ceramic substrate.

4. The atomization core of any one of claims 1 to 3, wherein the porosity of the porous glass-ceramic substrate ranges from 58% to 96%.

5. The atomization core of any one of claims 1 to 3, wherein a crystallinity of the porous glass-ceramic substrate is greater than 50%; and
optionally, the crystallinity of the porous glass-ceramic substrate ranges from 60% to 90%.

6. The atomization core of any one of claims 1 to 4, wherein a compressive strength of the porous glass-ceramic substrate is greater than 5 MPa; and
optionally, the compressive strength of the porous glass-ceramic substrate ranges from 5 MPa to 20 MPa.

7. The atomization core of any one of claims 1 to 5, wherein the porous glass-ceramic substrate further comprises pores formed by a pore-forming agent.

8. The atomization core according to any one of claims 1 to 6, wherein the heating element is at least one of a metal heating wire, a metal heating mesh, or a metal heating film;
the heating element is arranged on at least one surface of the porous glass-ceramic substrate; and
optionally, the metal heating film is selected from at least one of stainless steel or a nickel-containing alloy.

9. An atomizer (1), comprising the atomization core of any one of claims 1 to 7.

10. An electronic atomization device, comprising the atomizer (1) of claim 8, and further comprising a battery assembly (2).
